# EUROPEAN PATENT APPLICATION

(11) **EP 4 668 802 A1**
(43) Date of publication of application: **24.12.2025**
(21) Application number: 24763222.7
(22) Date of filing: 29.02.2024
(51) Int. Cl.: H04W 8/16

(54) **ROAMING DECISION-MAKING METHOD, COMMUNICATION NODE, AND STORAGE MEDIUM**

(30) Priority: 02.03.2023 CN 202310244643
(71) Applicant: ZTE Corporation, Shenzhen, Guangdong 518057 (CN)
(72) Inventor: LI, Yan, Shenzhen, Guangdong 518057 (CN); TANG, Ke, Shenzhen, Guangdong 518057 (CN); ZHANG, Yaodong, Shenzhen, Guangdong 518057 (CN)
(74) Representative: Aipex B.V.
(86) International application number: PCT/CN2024/079294
(87) International publication number: WO 2024/179542

(57) **Abstract**

Provided are a roaming control method, a communication node, and a storage medium. The method includes determining (S110) a roaming controller based on a roaming controller negotiation, and determining a state of a first roaming function and algorithm of the AP based on the roaming controller, where the roaming controller negotiation includes a negotiation of a roaming controller element; in response to the state of the first roaming function and algorithm being an enabled state, activating (S120) the first roaming function and algorithm of the AP; and in response to the state of the first roaming function and algorithm being a disabled state, deactivating (S130) the first roaming function and algorithm of the AP.

## Description

This application claims priority to Chinese Patent Application No. 202310244643.X filed with the China National Intellectual Property Administration (CNIPA) on Mar. 02, 2023, the disclosure of which is incorporated herein by reference in its entirety.

### TECHNICAL FIELD

This application relates to the technical field of wireless local area networks, for example, to a roaming control method, a communication node, and a storage medium.

### BACKGROUND

In the field of wireless local area networks, when the link quality of a station (STA) in a basic service set (BSS) deteriorates due to factors such as spatial movement or interference, guiding the STA to roam between different BSSs within the same extended service set (ESS) can optimize the link quality of the STA and enhance the service experience of users. Common roaming technologies in the IEEE 802.11 series standards, such as BSS transition management (BTM) in 802.11v and fast BSS transition (FT) in 802.11r, are triggered by an access point (AP) to guide the STA to roam to a target BSS. In practical commercial scenarios, mainstream terminal manufacturers do not rely on the roaming guidance of the AP and prefer to trust roaming decisions made by their own roaming algorithms.

However, when the roaming algorithms at both the AP side and the STA side are active simultaneously and differ in their roaming decisions, ineffective roaming interactions may occur. For example, the AP-side roaming decision determines that the STA needs to roam and guides the STA to a target BSS via a BTM request, while the STA-side roaming decision determines that roaming of the current STA is unnecessary and typically rejects the roaming request in a BTM response. Subsequently, the AP side may repeatedly initiate the same roaming guidance request. Such differences in roaming decisions due to algorithmic disparities result in multiple ineffective roaming interactions, wasting resources used by the AP-side roaming algorithm and air interface resources.

### SUMMARY

This application provides a roaming control method, a communication node, and a storage medium to address the issue of resource waste caused by simultaneous activation of the roaming algorithms of an AP and an STA having discrepancies in the roaming decision.

To achieve the preceding object, an embodiment of this application provides a roaming control method. The method is applied to an AP and includes the following:

A roaming controller is determined based on a roaming controller negotiation, and a state of a first roaming function and algorithm of the AP is determined based on the roaming controller, where the roaming controller negotiation includes a negotiation of a roaming controller element.

In response to the state of the first roaming function and algorithm being an enabled state, the first roaming function and algorithm of the AP is activated.

In response to the state of the first roaming function and algorithm being a disabled state, the first roaming function and algorithm of the AP is deactivated.

To achieve the preceding object, an embodiment of this application provides another roaming control method. The method is applied to an STA and includes the following:
A roaming controller is determined based on a roaming controller negotiation, and a state of a second roaming function and algorithm of the STA is determined based on the roaming controller, where the roaming controller negotiation includes a negotiation of a roaming controller element.

In response to the state of the second roaming function and algorithm being an enabled state, the second roaming function and algorithm of the STA is activated.

In response to the state of the second roaming function and algorithm being a disabled state, the second roaming function and algorithm of the STA is deactivated.

To achieve the preceding object, an embodiment of this application provides a communication node. The communication node includes a memory, a processor, a program stored on the memory and executable on the processor, and a data bus for enabling connection and communication between the processor and the memory, where the program, when executed by the processor, implements the operations of the roaming control method as described in any embodiment of this application.

To achieve the preceding object, an embodiment of this application provides a storage medium for computer-readable storage. The storage medium stores one or more programs that are executable by one or more processors to implement the operations of the roaming control method as described in any embodiment of this application.

In the roaming control method, communication node, and storage medium provided by the embodiments of this application, the AP determines a roaming controller through the roaming controller negotiation with an STA, where the roaming controller negotiation includes a negotiation of a roaming controller element. Based on the roaming controller element determined through the negotiation, the roaming controller is determined, and the state of the first roaming function and algorithm of the AP is determined based on the roaming controller. When the state of the first roaming function and algorithm is an enabled state, the AP activates the first roaming function and algorithm and may make roaming decisions and guide the STA to roam through the first roaming function and algorithm. When the state of the first roaming function and algorithm is a disabled state, the AP deactivates the first roaming function and algorithm, allowing the STA to make roaming decisions and guide roaming. By determination of the roaming controller through the roaming controller negotiation, the issue of resource waste caused by simultaneous activation of the roaming algorithms of the AP and the STA having discrepancies between roaming decisions is avoided. Through negotiation, either the AP or the STA is selected to activate the roaming function and algorithm to guide roaming, thereby avoiding ineffective roaming interactions, saving air interface resources, and conserving resources used by the roaming algorithm.

The preceding embodiments and other aspects of this application and implementations thereof are described in more detail in the description of drawings, detailed description, and claims.

### BRIEF DESCRIPTION OF DRAWINGS

FIG. 1 is an example diagram illustrating an AP transition according to an embodiment.
FIG. 2 is a flowchart of a roaming control method according to an embodiment.
FIG. 3 is a diagram illustrating a frame structure of a roaming controller element according to an embodiment.
FIG. 4 is a diagram illustrating a frame structure of a first roaming controller selection request frame according to an embodiment.
FIG. 5 is a diagram illustrating a frame structure of a first roaming controller selection response frame according to an embodiment.
FIG. 6 is a flowchart of another roaming control method according to an embodiment.
FIG. 7 is an example diagram illustrating an implementation of roaming controller negotiation through beacon frames and probe response frames according to an embodiment.
FIG. 8 is an example diagram illustrating an implementation of an AP receiving a request for a roaming controller element from an STA according to an embodiment.
FIG. 9 is an example diagram illustrating an implementation of an AP rejecting a request for a roaming controller element from an STA according to an embodiment.
FIG. 10 is an example diagram illustrating an implementation of roaming controller negotiation during communication between an AP and an STA according to an embodiment.
FIG. 11 is a diagram illustrating the structure of a roaming control apparatus according to an embodiment.
FIG. 12 is a diagram illustrating the structure of a roaming control apparatus according to an embodiment.
FIG. 13 is a diagram illustrating the structure of a communication node according to an embodiment.

### DETAILED DESCRIPTION

To illustrate the object, solutions, and advantages of this application more clearly, embodiments of this application are described hereinafter in detail in conjunction with drawings. It is to be noted that if not in collision, embodiments of this application and features therein may be combined with each other in any manner.

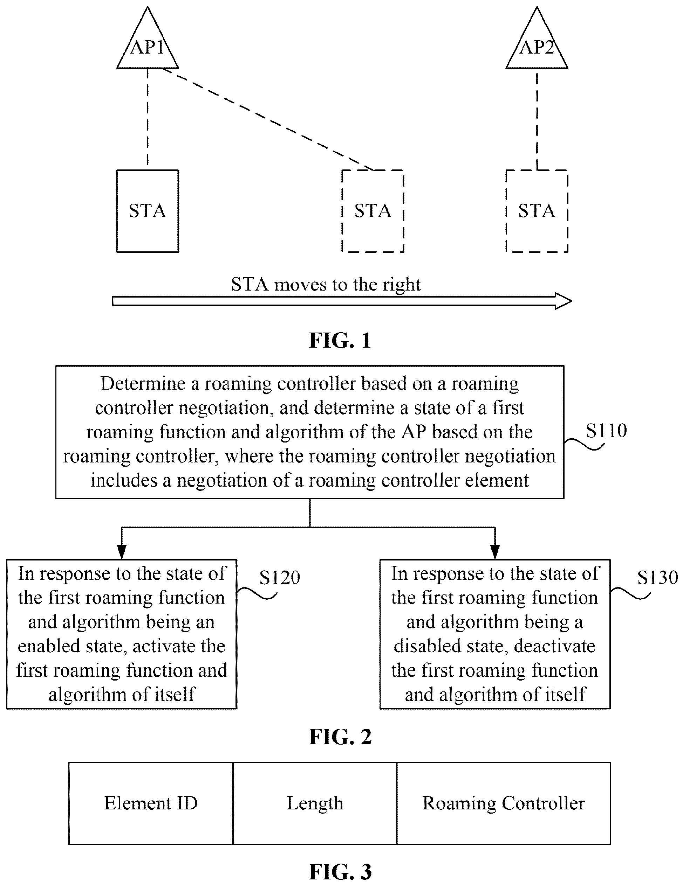

In a wireless fidelity (Wi-Fi) coverage scenario, multiple APs with the same service set identifier (SSID) are often used to enhance coverage. As a terminal moves within the coverage area, the signal strength from the originally connected AP weakens with increasing distance, while the signal strength from another AP strengthens with decreasing distance. After a certain position is reached, transitioning the connection to the new AP can provide better access speed. FIG. 1 is an example diagram illustrating an AP transition according to an embodiment, where a terminal transitions from AP1 to AP2 as it moves to the right. Terminal roaming includes two modes, that is, active transition mode and passive transition mode. Mode 1: The STA actively roams, and the terminal detects a stronger beacon frame signal with the same SSID as the currently connected AP, actively sends a probe request frame to detect APs with the same SSID, and selects a better one for association and access. Mode 2: The AP guides the roaming, sends a BSS Transition Management Request message through an ACTION frame and provides candidate APs for transition. The terminal accepts the transition request via a BSS Transition Management Response message, disconnects from the original AP, and associates with the target AP. When the roaming algorithms at both the AP side and the STA side are active simultaneously and roaming decisions differ, it results in the ineffective roaming interactions and resource waste. To address the preceding issue, this application provides a roaming control method that can effectively avoid the ineffective roaming interactions and resource waste.

FIG. 2 is a flowchart of a roaming control method according to an embodiment. As shown in FIG. 2, the roaming control method described in this embodiment is applied to an AP and includes S110 to S130.

In S110, a roaming controller is determined based on a roaming controller negotiation, and a state of a first roaming function and algorithm of the AP is determined based on the roaming controller, where the roaming controller negotiation includes a negotiation of a roaming controller element.

In this embodiment, the roaming controller may be understood as the control entity for guiding an STA to transition from one AP to another AP through a roaming algorithm. The roaming controller in the embodiments of this application is either the STA or the AP. The first roaming function and algorithm may be understood as the roaming function and algorithm at the AP side and can achieve functions such as collecting information before roaming to determine whether to roam, selecting a target AP for roaming, and guiding the STA to perform roaming transitions. The state of the first roaming function and algorithm in the embodiments of this application may be an enabled state or a disabled state.

The AP conducts the roaming controller negotiation with the STA, where the roaming controller negotiation may occur during any phase of the discovery phase, the association phase, or the communication phase between the AP and the STA. For example, the roaming controller negotiation may be performed during the discovery phase; the roaming controller negotiation may be performed again to modify the roaming controller during the association phase; during the communication phase, the roaming controller negotiation may be performed at any time to modify the roaming controller. The roaming controller negotiation in the embodiments of this application includes a negotiation of a roaming controller element. During the roaming controller negotiation, the roaming controller element is negotiated, and after negotiation, the AP may determine the roaming controller based on the roaming controller element. The roaming controller element may be an identifier ID of the AP or STA or other information uniquely identifying the AP and STA. After determining the roaming controller, the AP determines the state of the first roaming function and algorithm based on the roaming controller. When the AP determines that the roaming controller is the AP itself, the state of the first roaming function and algorithm is determined to be an enabled state. When the AP determines that the roaming controller is not the AP (that is, the roaming controller is the STA connected to this AP), the state of the first roaming function and algorithm is determined to be a disabled state.

It should be noted that S120 and S130 below are parallel operations with no sequential order in execution, and one is selected for execution in practice.

In S120, in response to the state of the first roaming function and algorithm being an enabled state, the first roaming function and algorithm of the AP is activated.

In a case where the state of the first roaming function and algorithm is an enabled state, the AP activates the first roaming function and algorithm to achieve the roaming between the STA and the AP through the first roaming function and algorithm. After activation, the first roaming function and algorithm can achieve functions such as monitoring the link quality between the AP and the STA, detecting poor link quality in time to initiate a transition, detecting APs with stronger signals, selecting an appropriate AP for the STA to transition to, and guiding the STA to perform a roaming transition.

In S130, in response to the state of the first roaming function and algorithm being a disabled state, the first roaming function and algorithm of the AP is deactivated.

In a case where the state of the first roaming function and algorithm is a disabled state, the AP deactivates the first roaming function and algorithm, and the first roaming function and algorithm does not operate. In this case, if the roaming function and algorithm of the STA is in an enabled state, the roaming function and algorithm of the STA may perform link detection and roaming guidance. If the roaming function and algorithm of the STA is in a disabled state, no roaming guidance is performed.

It should be noted that the AP in the embodiments of this application may connect to one or more STAs. The roaming control method provided by the embodiments of this application is applied to an AP and any one STA connected to the AP, guiding the roaming of the STA through negotiation. The AP and any one STA connected to the AP may perform the roaming controller negotiation using the roaming control method provided by the embodiments of this application. For a single STA, after the AP activates the first roaming function and algorithm in the embodiments of this application, the first roaming function and algorithm operates to monitor the link quality between the AP and this STA and guide this STA to roam. When the AP deactivates the first roaming function and algorithm, the deactivation may apply only to the first roaming function and algorithm for this STA, without affecting the roaming decision relationship between the AP and other STAs, or the AP may deactivate the first roaming function and algorithm for some or all STAs.

The roaming control method provided by the embodiments of this application enables the AP to determine a roaming controller through the roaming controller negotiation with the STA, avoiding resource waste caused by simultaneous activation of the roaming algorithms of the AP and the STA having different roaming decisions. By the selection of either the AP or the STA through negotiation to activate the roaming function and algorithm, roaming guidance is achieved, ineffective roaming interactions are prevented, and air interface resources are saved. Moreover, resources used by the roaming algorithm can be conserved.

In an embodiment, before the roaming controller is determined based on the roaming controller negotiation, the method also includes the following:

During a discovery process between the AP and an STA, a beacon frame is generated and sent to the STA, where the beacon frame carries the roaming controller element.

In this embodiment, the beacon frame is Beacon frame. During the discovery process between the AP and the STA, the AP may generate and broadcast a beacon frame. When the beacon frame is generated, the beacon frame carries the roaming controller element. In the embodiments of this application, a default roaming controller element may be preset, and the beacon frame carries the default roaming controller element, and the default roaming controller element may be the AP.

In an embodiment, before the roaming controller is determined based on the roaming controller negotiation, the method also includes the following:

During a discovery process between the AP and an STA, a probe request frame sent by the STA is received.

A probe response frame is generated and sent to the STA, where the probe response frame carries the roaming controller element.

In this embodiment, the probe request frame is Probe Request frame, and the probe response frame is Probe Response frame. During the discovery process between the AP and the STA, the STA may generate and send a probe request frame to detect APs and select a better-quality AP for association and access. After receiving the probe request frame sent by the STA, the AP generates and feeds back a probe response frame to the STA. When the probe response frame is generated, the probe response frame carries the roaming controller element. In the embodiments of this application, a default roaming controller element may be preset, and the probe response frame carries the default roaming controller element, and the default roaming controller element may be the AP.

In embodiments of this application, element information may be added to the existing frame structures of the beacon frame and probe response frame to carry the roaming controller element in the beacon frame and probe response frame so that roaming controller negotiation can be performed during the discovery process between the AP and the STA.

FIG. 3 is a diagram illustrating a frame structure of a roaming controller element according to an embodiment. As shown in FIG. 3, the roaming controller element includes an element identity (Element ID), a length (Length), and a roaming controller (Roaming Controller), where the Roaming Controller has a length of 1 bit, the 1 bit is set to 0 to indicate the AP and to 1 to indicate the STA; the default setting is 0, indicating that the roaming controller is the AP.

In an embodiment, before the roaming controller is determined based on the roaming controller negotiation, the method also includes the following:

During an association process between the AP and an STA, an association request frame sent by the STA is received, where the association request frame includes the roaming controller element.

In a case where a request of the roaming controller element of the STA is accepted, a first association response frame is generated and fed back to the STA, where the first association response frame includes association information, and the association information does not include the roaming controller element.

In a case where a request of the roaming controller element of the STA is rejected, a second association response is generated and fed back to the STA, where the second association response frame includes the roaming controller element.

In this embodiment, the association request frame is Association Request frame; the first association response frame may be understood as a type of Association Response frame. In the embodiments of this application, the first association response frame is generated when the AP accepts the request of the roaming controller element of the STA. The association information may be understood as information used during the association process between the AP and the STA to achieve association. The association information may include information about whether the STA is allowed to join the AP. In the embodiments of this application, the association information does not include the roaming controller element, that is, the first association response frame does not carry the roaming controller element. The second association response frame may be understood as a type of Association Response frame generated when the AP rejects the request of the roaming controller element of the STA. Both the first association response frame and the second association response frame in the embodiments of this application are Association Response frame, and the information carried is not exactly the same. The first association response frame does not carry the roaming controller element, indicating that the AP receives the request of the roaming controller element of the STA. The second association response frame carries the roaming controller element, indicating that the AP rejects the request of the roaming controller element of the STA.

During the association process between the AP and the STA, the STA generates and sends an association request frame to request to join the AP. During the process, the STA may negotiate with the AP on the roaming controller. Thus, the STA may carry the roaming controller element in the association request frame. After receiving the association request frame sent by the STA, the AP parses the association request frame to determine that the association request frame carries the roaming controller element. In this case, it may be determined that the STA requests to modify the roaming controller element. In a case of receiving the request of the roaming controller element of the STA, that is, in a case where the AP receives the modification of the roaming controller element from the STA, the AP generates the first association response frame that does not include the roaming controller element and feeds back the first association response frame to the STA. After receiving the first association response frame, the STA may confirm that the modification of the roaming controller element is successful and adopt the roaming controller element carried in the association request frame as the final negotiation result, that is, as the final roaming controller element of the roaming controller. Simultaneously, the AP may also determine and record the final negotiation result, and adopt the roaming controller element carried in the association request frame as the final determined roaming controller element. In a case of rejecting the request of the roaming controller element of the STA, that is, in a case where the AP rejects the modification of the roaming controller element from the STA, the AP generates the second association response frame that includes the roaming controller element and feeds back the second association response frame to the STA. After receiving the second association response frame, the STA may confirm that the modification of the roaming controller element has failed and adopt the roaming controller element carried in the second association response frame as the final negotiation result, that is, as the final roaming controller element of the roaming controller.

In an embodiment, before the roaming controller is determined based on the roaming controller negotiation, the method also includes the following:

During a communication process between the AP and an STA, a first roaming controller selection request frame sent by the STA is received, where the first roaming controller selection request frame carries the roaming controller element.

A first roaming controller selection response frame is generated and fed back to the STA, where the first roaming controller selection response frame carries first roaming controller response information, and the first roaming controller response information is acceptance or rejection of a request.

In this embodiment, the first roaming controller selection request frame may be understood as a negotiation request sent by the STA to modify the roaming controller after the STA accesses the AP. The first roaming controller selection response frame may be understood as a response from the AP to the first roaming controller selection request frame. Both the first roaming controller selection request frame and the first roaming controller selection response frame in the embodiments of this application are management frames. The first roaming controller response information may be understood as information responding to the STA's modification of the roaming controller. The first roaming controller response information is acceptance or rejection of the request. In the embodiments of this application, acceptance and rejection of the request may be indicated by 0 and 1. For example, 0 indicates acceptance, and 1 indicates rejection.

After the STA accesses the AP, the STA and the AP enter a communication phase. During this communication process, the STA may negotiate with the AP to modify the roaming controller. The STA generates and sends a first roaming controller selection request frame to the AP and carries the roaming controller element in the first roaming controller selection request frame. The STA negotiates with the AP to modify the roaming controller to the roaming controller element carried in the first roaming controller selection request frame. After receiving the first roaming controller selection request frame sent by the STA, the AP determines that the STA requests to modify the roaming controller element, decides whether to accept the STA's modification of the roaming controller, and generates a first roaming controller selection response frame carrying first roaming controller response information. The first roaming controller response information is acceptance or rejection of a request. After receiving the first roaming controller selection response frame, the STA parses the first roaming controller selection response frame to obtain the first roaming controller response information and determines whether the AP accepts the modification of the roaming controller element based on the first roaming controller response information.

In an embodiment, the roaming controller element is determined based on the first roaming controller selection response frame.

After generating the first roaming controller selection response frame, the AP determines the roaming controller element based on the first roaming controller response information in the first roaming controller selection response frame. If the first roaming controller response information is acceptance of the request, the roaming controller element carried in the first roaming controller selection request frame is determined as the roaming controller element. If the first roaming controller response information is rejection of the request, the original roaming controller element is retained without modification.

In an embodiment, before the roaming controller is determined based on the roaming controller negotiation, the method also includes the following:

During a communication process between the AP and an STA, a second roaming controller selection request frame is generated and sent to the STA, where the second roaming controller selection request frame carries the roaming controller element.

A second roaming controller selection response frame fed back by the STA is received, where the second roaming controller selection response frame carries second roaming controller response information, and the second roaming controller response information is acceptance or rejection of a request.

In this embodiment, the second roaming controller selection request frame may be understood as a negotiation request sent by the AP to modify the roaming controller after the STA accesses the AP. The second roaming controller selection response frame may be understood as a response from the STA to the second roaming controller selection request frame. Both the second roaming controller selection request frame and the second roaming controller selection response frame in the embodiments of this application are management frames. The second roaming controller response information may be understood as information from the STA responding to the AP's modification of the roaming controller. The second roaming controller response information is acceptance or rejection of the request. In the embodiments of this application, acceptance and rejection of the request may also be indicated by 0 and 1. For example, 0 indicates acceptance, and 1 indicates rejection.

After the STA accesses the AP, the STA and the AP enter a communication phase. During this communication process, the AP may negotiate with the STA to modify the roaming controller. The AP generates and sends a second roaming controller selection request frame to the STA and carries the roaming controller element in the second roaming controller selection request frame. The AP negotiates with the STA to modify the roaming controller to the roaming controller element carried in the second roaming controller selection request frame. After the AP generates and sends the second roaming controller selection request frame to the STA, the STA may determine that the AP requests to modify the roaming controller element, decides whether to accept the AP's modification of the roaming controller, generates a second roaming controller selection response frame carrying second roaming controller response information, and feeds back the second roaming controller selection response frame to the AP. The second roaming controller response information is acceptance or rejection of the request. After receiving the second roaming controller selection response frame, the AP parses the second roaming controller selection response frame to obtain the second roaming controller response information and determines whether the STA accepts the modification of the roaming controller element based on the second roaming controller response information.

In an embodiment, the method also includes determining the roaming controller element based on the second roaming controller selection response frame.

After receiving the second roaming controller selection response frame, the AP determines the roaming controller element based on the second roaming controller response information in the second roaming controller selection response frame. If the second roaming controller response information is acceptance of the request, the roaming controller element carried in the second roaming controller selection request frame is determined as the roaming controller element. If the second roaming controller response information is rejection of the request, the original roaming controller element is retained without modification.

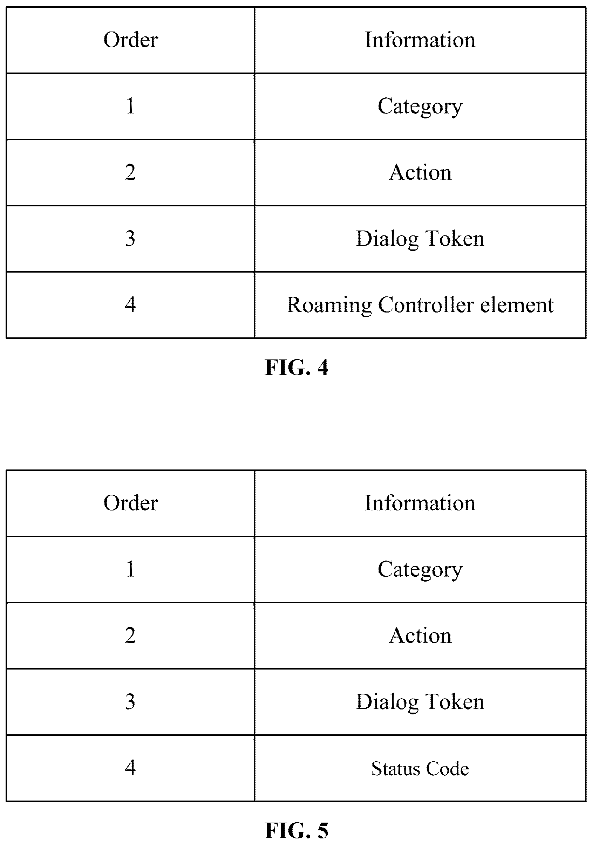

The frame structures of the first roaming controller selection request frame and the second roaming controller selection request frame in the embodiments of this application are the same, and both are a type of roaming controller selection request frame. FIG. 4 is a diagram illustrating a frame structure of a first roaming controller selection request frame according to an embodiment. As shown in FIG. 4, the first roaming controller selection request frame includes different element types (Information) and orders (Order), where Information may include the following types: Category, Action, Dialog Token, and Roaming Controller element. The preceding information may be ordered as 1, 2, 3, and so forth.

The frame structures of the first roaming controller selection response frame and the second roaming controller selection response frame in the embodiments of this application are the same, and both are a type of roaming controller selection response frame. FIG. 5 is a diagram illustrating a frame structure of a first roaming controller selection response frame according to an embodiment. As shown in FIG. 5, the first roaming controller selection response frame includes different element types (Information) and orders (Order), where Information may include the following types: Category, Action, Dialog Token, and Status Code. The preceding information may be ordered as 1, 2, 3, and so forth. Status Code is used to indicate the first roaming controller response information, where Status Code being 0 indicates acceptance of the request, and Status Code being 1 indicates rejection of the request.

In an embodiment, the first roaming function and algorithm includes at least one of link quality information collection, roaming target selection, or roaming transition function.

In this embodiment, link quality information collection can achieve the collection of quality information for the communication link between the AP and the STA. Based on the link quality information, whether to perform a roaming transition can be determined. When link quality is poor, an AP transition is performed promptly to ensure the network quality of the STA. Roaming target selection can achieve the selection of a target AP for the STA to access. Through roaming target selection, a better-quality target AP can be chosen for the STA to access. The roaming transition function enables the STA to transition the connection from one AP to another AP. The first roaming function and algorithm in the embodiments of this application include one or more of link quality information collection, roaming target selection, and roaming transition function, enabling pre-roaming determination and roaming functionality for the STA.

The embodiments of this application provide specific negotiation procedures during the discovery process, association process, and communication process between an AP and an STA. During the discovery process, the STA and the AP may complete roaming controller negotiation by carrying the default roaming controller element in the beacon frame or the probe response frame. During the subsequent association process, the STA may modify the roaming controller element through an association request frame, and the AP responds to the STA's modification of the roaming controller element through an association response frame, thereby achieving the roaming controller negotiation between the AP and the STA during the association process. During the communication process after association, both the AP and the STA may perform the roaming controller negotiation again through the roaming controller selection request frame and the roaming controller selection response frame to modify the roaming controller element.

The embodiments of this application provide a roaming control method that enables the roaming controller negotiation during the discovery process, association process, and communication processes between the AP and the STA. A frame structure for the roaming controller element is defined, where element information is added to the existing beacon frame, probe response frame, association request frame, and association response frame to enable these frames to carry the roaming controller element, thereby completing the roaming controller negotiation. Frame structures for the roaming controller selection request frame and roaming controller selection response frame are also defined, and the roaming controller negotiation is performed through the roaming controller selection request frame and the roaming controller selection response frame. The embodiments of this application provide specific roaming controller negotiation procedures for different phases so that the AP and the STA can perform the roaming controller negotiation using the provided implementations provided by the embodiments of this application and determine the roaming controller to avoid the resource waste caused by simultaneous activation of the roaming algorithms of the AP and the STA having discrepancies. Through negotiation, either the AP or the STA is selected to activate the roaming function and algorithm to guide roaming, thereby avoiding ineffective roaming interactions and saving air interface resources. Moreover, deactivating the roaming function and algorithm when the AP or the STA does not act as the roaming controller can save the operational resources of the roaming algorithm and prevent resource waste.

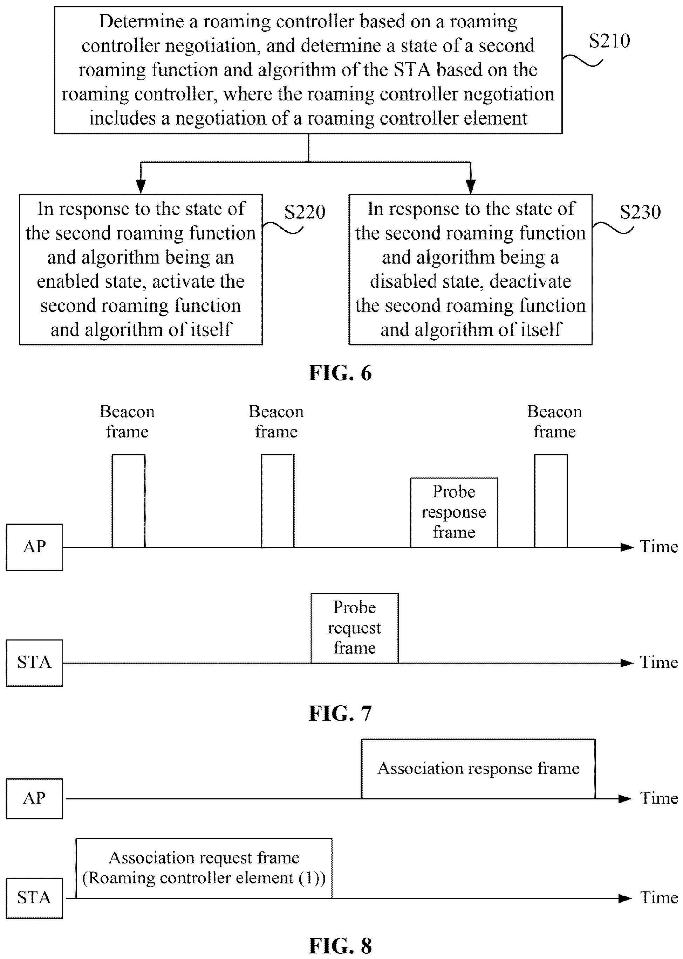

FIG. 6 is a flowchart of another roaming control method according to an embodiment. As shown in FIG. 6, the roaming control method in this embodiment may be applied to an STA as described in any embodiment of this application. The method includes S210 to S230.

In S210, a roaming controller is determined based on a roaming controller negotiation, and a state of a second roaming function and algorithm of the STA is determined based on the roaming controller, where the roaming controller negotiation includes a negotiation of a roaming controller element.

In this embodiment, the second roaming function and algorithm may be understood as the roaming function and algorithm at the STA side and can achieve functions such as collecting information before roaming to determine whether to roam, selecting a target AP for roaming, and autonomously guiding roaming transitions. The state of the second roaming function and algorithm in the embodiments of this application may be an enabled state or a disabled state.

The STA in the embodiments of this application may perform a roaming controller negotiation with an AP, where the roaming controller negotiation may occur during the discovery phase, association phase, or communication phase between the AP and the STA. For example, the roaming controller negotiation may be performed during the discovery phase; the roaming controller negotiation may be performed again to modify the roaming controller during the association phase; during the communication phase, the roaming controller negotiation may be performed at any time to modify the roaming controller. The roaming controller negotiation in the embodiments of this application includes a negotiation of a roaming controller element. During the roaming controller negotiation, the roaming controller element is negotiated, and after negotiation, the STA may determine the roaming controller based on the roaming controller element. The roaming controller element may be an identifier ID of the AP or STA or other information uniquely identifying the AP and STA. After determining the roaming controller, the STA determines the state of the second roaming function and algorithm based on the roaming controller. When the STA determines that the roaming controller is the STA itself, the state of the second roaming function and algorithm is determined to be an enabled state. When the STA determines that the roaming controller is not the STA (that is, the roaming controller is the AP to which the STA is connected), the state of the second roaming function and algorithm is determined to be a disabled state.

It should be noted that for a given AP and STA pair, if the roaming controller is determined to be the AP through negotiation, the AP may determine the state of the first roaming function and algorithm to be an enabled state. If the roaming controller is the STA, the STA may determine the state of the second roaming function and algorithm to be an enabled state. The AP and the STA can only determine the state of their respective roaming functions and algorithms based on the result of the roaming controller negotiation and activate or deactivate their respective roaming functions and algorithms.

It should be noted that S220 and S230 below are parallel operations with no sequential order in execution, and one is selected for execution in practice.

In S220, in response to the state of the second roaming function and algorithm being an enabled state, the second roaming function and algorithm of the STA is activated.

In a case where the state of the second roaming function and algorithm is an enabled state, the STA activates the second roaming function and algorithm to achieve the roaming between the STA and the AP through the second roaming function and algorithm. After being activated, the second roaming function and algorithm can achieve functions such as monitoring the link quality between the AP and the STA, detecting poor link quality in time to initiate a transition, detecting APs with stronger signals, selecting an appropriate AP for the STA to transition to, and autonomously guiding roaming transitions.

In S230, in response to the state of the second roaming function and algorithm being a disabled state, the second roaming function and algorithm of the STA is deactivated.

In a case where the state of the second roaming function and algorithm is a disabled state, the STA deactivates the second roaming function and algorithm, and the second roaming function and algorithm does not operate. In this case, if the roaming function and algorithm of the AP is in an enabled state, the roaming function and algorithm of the AP may perform link detection and roaming guidance, and the STA may avoid rejecting roaming due to decisions made by the roaming algorithm of the STA. If the roaming function and algorithm of the AP is in a disabled state, no roaming guidance is performed.

In the roaming control method provided by the embodiment of this application, the STA determines a roaming controller through the roaming controller negotiation with the AP so that the issue of resource waste caused by simultaneous activation of the roaming algorithms of the AP and the STA having discrepancies in the roaming decision is avoided. Through negotiation, either the AP or the STA is selected to activate the roaming function and algorithm to guide roaming, thereby avoiding ineffective roaming interactions, saving air interface resources, and conserving resources used by the roaming algorithm.

In an embodiment, before the roaming controller is determined based on the roaming controller negotiation, the method also includes the following:

During a discovery process between an AP and the STA, a beacon frame sent by the AP is received, where the beacon frame carries the roaming controller element.

During the discovery process between the AP and the STA, the AP carries the roaming controller element in the beacon frame when generating the beacon frame. After receiving the beacon frame, the STA may determine the roaming controller element carried in the beacon frame by parsing the beacon frame. This embodiment can achieve the roaming controller negotiation during the discovery process between the AP and the STA, and the STA may determine the roaming controller based on the roaming controller element carried in the beacon frame.

In an embodiment, before the roaming controller is determined based on the roaming controller negotiation, the method also includes the following:

During a discovery process between an AP and the STA, a probe request frame is generated and sent to the AP.

A probe response frame fed back by the AP is received, where the probe response frame carries the roaming controller element.

During the discovery process between the AP and the STA, the STA may generate and send a probe request frame to the AP so that APs are detected and a better-quality AP for association and access is selected. After receiving the probe request frame sent by the STA, the AP generates a probe response frame carrying the roaming controller element and feeds back the probe response frame to the STA. After receiving the probe response frame, the STA may determine the roaming controller element carried in the probe response frame by parsing the probe response frame. This embodiment can achieve the roaming controller negotiation during the discovery process between the AP and the STA, and the STA may determine the roaming controller based on the roaming controller element carried in the probe response frame.

In an embodiment, before the roaming controller is determined based on the roaming controller negotiation, the method also includes the following:

During an association process between an AP and the STA, an association request frame is generated and sent to the AP, where the association request frame includes the roaming controller element.

A first association response frame fed back by the AP or a second association response frame fed back by the AP is received.

The first association response frame includes association information, and the association information does not include the roaming controller element. The second association response frame includes the roaming controller element.

During the association process between the AP and the STA, the STA requests to join the AP through an association request frame. During the process, the STA may negotiate with the AP on the roaming controller. Therefore, when generating the association request frame, the STA carries the roaming controller element in the association request frame to request modification of the roaming controller element. After receiving the association request frame, the AP determines that the STA requests to modify the roaming controller element, generates a first association response frame that does not include the roaming controller element when the AP accepts the STA's modification of the roaming controller element, and generates a second association response frame that includes the roaming controller element when the AP rejects the STA's modification of the roaming controller element. The STA may receive either the first association response frame or the second association response frame fed back by the AP. After receiving the association response frame, the STA parses the association response frame to determine whether the association response frame carries the roaming controller element, determines whether the received association response frame is the first association response frame or the second association response frame, and determines whether the AP agrees to the modification of the roaming controller element based on whether the association response frame carries the roaming controller element. After receiving the first association response frame, the STA determines that the AP agrees to the modification of the roaming controller element, and adopts the roaming controller element carried in the association request frame as the final roaming controller element. After receiving the second association response frame, the STA determines that the AP rejects the modification of the roaming controller element, and adopts the roaming controller element carried in the second association response frame as the final roaming controller element.

In an embodiment, before the roaming controller is determined based on the roaming controller negotiation, the method also includes the following:

During a communication process between an AP and the STA, a first roaming controller selection request frame is generated and sent to the AP, where the first roaming controller selection request frame carries the roaming controller element.

A first roaming controller selection response frame fed back by the AP is received, where the first roaming controller selection response frame carries first roaming controller response information, and the first roaming controller response information is acceptance or rejection of a request.

During the communication process between the AP and the STA, when the STA needs to modify the roaming controller element, the STA may generate and send the first roaming controller selection request frame carrying the roaming controller element to the AP. The AP determines the first roaming controller response information, carries the first roaming controller response information in the first roaming controller selection response frame, and feeds back the first roaming controller selection response frame to the STA. After receiving the first roaming controller selection response frame, the STA parses the first roaming controller selection response frame to obtain the first roaming controller response information and determines whether the AP accepts the modification of the roaming controller element based on the first roaming controller response information.

In an embodiment, the method also includes determining the roaming controller element based on the first roaming controller selection response frame.

After the STA parses the first roaming controller selection response frame to obtain the first roaming controller response information, if the first roaming controller response information is acceptance of the request, the roaming controller element carried in the first roaming controller selection request frame is determined as the roaming controller element; and if the first roaming controller response information is rejection of the request, the original roaming controller element is retained without modification.

In an embodiment, the method also includes the following:

During a communication process between an AP and the STA, a second roaming controller selection request frame sent by the AP is received, where the second roaming controller selection request frame carries the roaming controller element.

A second roaming controller selection response frame is generated and then fed back to the AP, where the second roaming controller selection response frame carries second roaming controller response information, and the second roaming controller response information is acceptance or rejection of a request.

During the communication process between the AP and the STA, when the AP needs to modify the roaming controller element, the AP may generate and send the second roaming controller selection request frame carrying the roaming controller element to the STA. The STA determines the second roaming controller response information, carries the second roaming controller response information in the second roaming controller selection response frame, and feeds back the second roaming controller selection response frame to the AP. After receiving the second roaming controller selection response frame, the AP parses the second roaming controller selection response frame to obtain the second roaming controller response information and determines whether the STA accepts the modification of the roaming controller element based on the second roaming controller response information.

In an embodiment, the method also includes determining the roaming controller element based on the second roaming controller selection response frame.

When generating the second roaming controller selection response frame, the STA may determine the second roaming controller response information. If the second roaming controller response information is acceptance of the request, the STA determines the roaming controller element carried in the second roaming controller selection request frame as the roaming controller element. If the second roaming controller response information indicates rejection of the request, the original roaming controller element is retained without modification.

In an embodiment, the second roaming function and algorithm includes at least one of link quality information collection, roaming target selection, or roaming transition function.

The second roaming function and algorithm of the STA in this embodiment can also implement one or more of link quality information collection, roaming target selection, and roaming transition function, achieving functions such as pre-roaming determination and guidance of the STA to perform roaming.

The embodiments of this application provide a roaming control method that enables the roaming controller negotiation during the discovery, association, and communication processes between the AP and the STA. A frame structure for the roaming controller element is defined, where element information is added to the existing beacon frame, the probe response frame, the association request frame, and the association response frame to enable these frames to carry the roaming controller element, thereby completing the roaming controller negotiation. Frame structures for the roaming controller selection request frame and the roaming controller selection response frame are also defined, and the roaming controller negotiation is performed through the roaming controller selection request frame and the roaming controller selection response frame. The embodiments of this application provide specific roaming controller negotiation procedures for different phases so that the AP and the STA can perform the roaming controller negotiation using the provided implementations provided by the embodiments of this application and determine the roaming controller to avoid resource waste caused by simultaneous activation of the roaming algorithms of the AP and the STA which have discrepancies. Through negotiation, either the AP or the STA is selected to activate the roaming function and algorithm to guide roaming, thereby avoiding ineffective roaming interactions and saving air interface resources. Moreover, deactivating the roaming function and algorithm when the AP or the STA does not act as the roaming controller can save the operational resources of the roaming algorithm and prevent resource waste.

The process of the roaming controller negotiation is described below through different embodiments.

### Embodiment one: Roaming Controller Negotiation during Discovery Process

During the discovery process, the roaming controller negotiation is performed by carrying a roaming controller element in the beacon frame and probe response frame. FIG. 7 is an example diagram illustrating an implementation of the roaming controller negotiation through the beacon frame and probe response frame according to an embodiment. Reference is made to FIG. 7.

The AP sends the beacon frame carrying the roaming controller element, where Roaming Controller is set to 0, indicating that the default roaming controller is the AP.

The STA sends the probe request frame to discover and collect AP information. The AP carries the roaming controller element in the probe response frame, where Roaming Controller is set to 0, informing the STA that the default roaming controller is the AP.

### Embodiment two: Roaming Controller Negotiation during Association Process

FIG. 8 is an example diagram illustrating an implementation of an AP receiving a request for a roaming controller element from an STA according to an embodiment.

During the association process, the STA sends an association request frame carrying the roaming controller element and sets the Roaming Controller field in the Roaming Controller element to 1, indicating that the STA wishes to negotiate and make itself the roaming controller. The association response frame (that is, the first association response frame) sent by the AP does not carry the roaming controller element, indicating that the request of the STA for the roaming controller negotiation is accepted, and the AP sets the roaming controller to the STA.

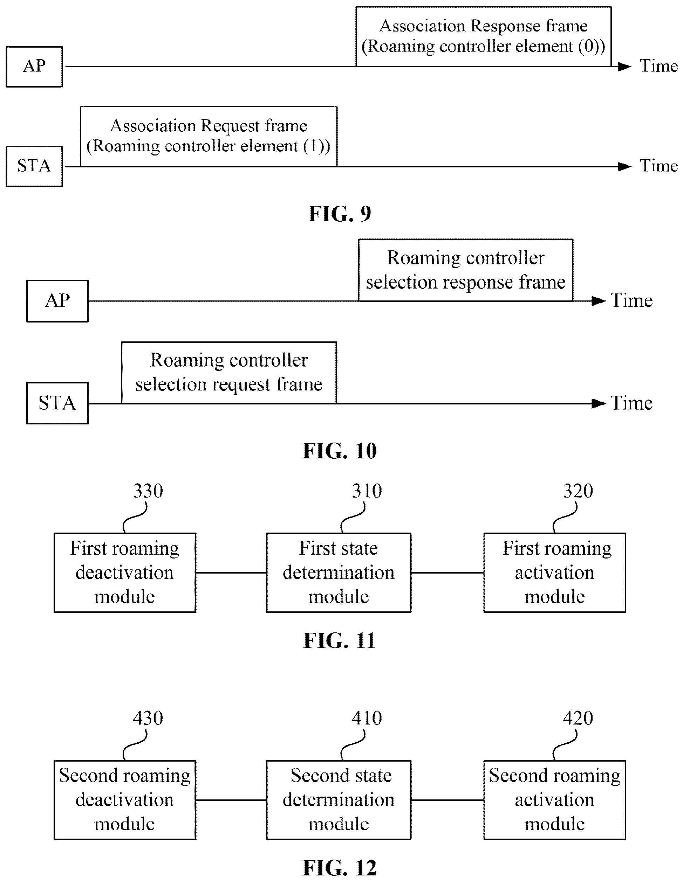

FIG. 9 is an example diagram illustrating an implementation of an AP rejecting a request for a roaming controller element from an STA according to an embodiment.

During the association process, the roaming controller field in the roaming controller element carried in the association request frame sent by the STA is set to 1, indicating that the STA wishes to negotiate and make itself the roaming controller. The roaming controller field in the roaming controller element carried in the association response frame (that is, the second association response frame) sent by the AP is set to 0, indicating rejection of the request of the STA for the roaming controller negotiation, and the roaming controller is still the AP.

It should be noted that the result of the roaming controller negotiation, that is, acceptance or rejection, does not affect the final result of the association. For example, a failed association does not become successful due to a successful roaming controller negotiation, and a successful association does not fail due to a failed roaming controller negotiation.

### Embodiment three: Roaming Controller Negotiation during Communication Process

FIG. 10 is an example diagram illustrating an implementation of a roaming controller negotiation during communication between an AP and an STA according to an embodiment. During the communication process, the roaming controller negotiation is achieved through management frames, where the roaming controller selection request frames (that is, the first roaming controller selection request frame and the second roaming controller selection request frame) and roaming controller selection response frames (that is, the first roaming controller selection response frame and the second roaming controller selection response frame) are management frames.

The STA (or AP) sends a roaming controller selection request frame carrying the roaming controller element. The AP (or STA) responds with a roaming controller selection response frame to indicate whether the modification of the roaming controller element is accepted, where Status Code of 0 indicates acceptance, and Status Code of 1 indicates rejection.

The embodiments of this application also provide a roaming control apparatus. FIG. 11 is a diagram illustrating the structure of a roaming control apparatus according to an embodiment. The roaming control apparatus is applied to an AP and includes a first state determination module 310, a first roaming activation module 320, and a first roaming deactivation module 330.

The first state determination module 310 is configured to determine a roaming controller based on a roaming controller negotiation and determine a state of a first roaming function and algorithm of the AP based on the roaming controller, where the roaming controller negotiation includes a negotiation of a roaming controller element.

The first roaming activation module 320 is configured to activate the first roaming function and algorithm of the AP in response to the state of the first roaming function and algorithm being an enabled state.

The first roaming deactivation module 330 is configured to deactivate the first roaming function and algorithm of the AP in response to the state of the first roaming function and algorithm being a disabled state.

In the roaming control apparatus provided by the embodiment of this application, the STA determines the roaming controller through the roaming controller negotiation with the AP so that the issue of resource waste caused by simultaneous activation of the roaming algorithms of the AP and the STA having discrepancies in the roaming decision is avoided. Through negotiation, either the AP or the STA is selected to activate the roaming function and algorithm to guide roaming, thereby avoiding ineffective roaming interactions, saving air interface resources, and conserving resources used by the roaming algorithm.

In an embodiment, the apparatus also includes a beacon frame sending module.

The beacon frame sending module is configured to, during a discovery process between the AP and an STA, generate a beacon frame and send the beacon frame to the STA, where the beacon frame carries the roaming controller element.

In an embodiment, the apparatus also includes a probe request receiving module and a probe response sending module.

The probe request receiving module is configured to, during a discovery process between the AP and an STA, receive a probe request frame sent by the STA.

The probe response sending module is configured to generate a probe response frame and send the probe response frame to the STA, where the probe response frame carries the roaming controller element.

In an embodiment, the apparatus also includes an association request receiving module, a first association response feedback module, and a second association response feedback module.

The association request receiving module is configured to, during an association process between the AP and an STA, receive an association request frame sent by the STA, where the association request frame includes the roaming controller element.

The first association response feedback module is configured to, in response to accepting a request of the roaming controller element of the STA, generate a first association response frame and feed back the first association response frame to the STA, where the first association response frame includes association information, and the association information does not include the roaming controller element.

The second association response feedback module is configured to, in response to rejecting a request of the roaming controller element of the STA, generate a second association response frame and feed back the second association response frame to the STA, where the second association response frame includes the roaming controller element.

In an embodiment, the apparatus also includes a first selection request receiving module and a first selection response generation module.

The first selection request receiving module is configured to, during a communication process between the AP and an STA, receive a first roaming controller selection request frame sent by the STA, where the first roaming controller selection request frame carries the roaming controller element.

The first selection response generation module is configured to generate a first roaming controller selection response frame and feed back the first roaming controller selection response frame to the STA, where the first roaming controller selection response frame carries first roaming controller response information, and the first roaming controller response information is acceptance or rejection of a request.

In an embodiment, the apparatus also includes a first information determination module.

The first information determination module is configured to determine the roaming controller element based on the first roaming controller selection response frame.

In an embodiment, the apparatus also includes a second selection request sending module and a second selection response receiving module.

The second selection request sending module is configured to, during a communication process between the AP and an STA, generate and send a second roaming controller selection request frame to the STA, where the second roaming controller selection request frame carries the roaming controller element.

The second selection response receiving module is configured to receive a second roaming controller selection response frame fed back by the STA, where the second roaming controller selection response frame carries second roaming controller response information, and the second roaming controller response information is acceptance or rejection of a request.

In an embodiment, the apparatus also includes a second information determination module.

The second information determination module is configured to determine the roaming controller element based on the second roaming controller selection response frame.

In an embodiment, the first roaming function and algorithm includes at least one of link quality information collection, roaming target selection, or roaming transition function.

The roaming control apparatus provided in this embodiment and the roaming control method provided in the preceding embodiments belong to the same concept. For technical details not described in detail in this embodiment, reference may be made to any one of the preceding embodiments. This embodiment has the same beneficial effects as performing the roaming control method.

The embodiments of this application also provide a roaming control apparatus. FIG. 12 is a diagram illustrating the structure of a roaming control apparatus according to an embodiment. The roaming control apparatus is applied to an STA and includes a second state determination module 410, a second roaming activation module 420, and a second roaming deactivation module 430.

The second state determination module 410 is configured to determine a roaming controller based on a roaming controller negotiation and determine a state of a second roaming function and algorithm of the STA based on the roaming controller, where the roaming controller negotiation includes a negotiation of a roaming controller element.

The second roaming activation module 420 is configured to activate the second roaming function and algorithm of the STA in response to the state of the second roaming function and algorithm being an enabled state.

The second roaming deactivation module 430 is configured to deactivate the second roaming function and algorithm of the STA in response to the state of the second roaming function and algorithm being a disabled state.

In the roaming control apparatus provided by the embodiment of this application, the STA determines the roaming controller through the roaming controller negotiation with the AP so that the issue of resource waste caused by simultaneous activation of the roaming algorithms of the AP and the STA having different roaming decisions is avoided. Through negotiation, either the AP or the STA is selected to activate the roaming function and algorithm to guide roaming, thereby avoiding ineffective roaming interactions, saving air interface resources, and conserving resources used by the roaming algorithm.

In an embodiment, the apparatus also includes a beacon frame receiving module.

The beacon frame receiving module is configured to, during a discovery process between an AP and the STA, receive a beacon frame sent by the AP, where the beacon frame carries the roaming controller element.

In an embodiment, the apparatus also includes a probe request sending module and a probe response receiving module.

The probe request sending module is configured to, during a discovery process between an AP and the STA, generate and send a probe request frame to the AP.

The probe response receiving module is configured to receive a probe response frame fed back by the AP, where the probe response frame carries the roaming controller element.

In an embodiment, the apparatus also includes an association request sending module and an association response receiving module.

The association request sending module is configured to, during an association process between an AP and the STA, generate and send an association request frame to the AP, where the association request frame includes the roaming controller element.

The association response receiving module is configured to receive a first association response frame fed back by the AP or a second association response frame fed back by the AP.

The first association response frame includes association information, and the association information does not include the roaming controller element; and the second association response frame includes the roaming controller element.

In an embodiment, the apparatus also includes a first selection request sending module and a first selection response receiving module.

The first selection request sending module is configured to, during a communication process between an AP and the STA, generate and send a first roaming controller selection request frame to the AP, where the first roaming controller selection request frame carries the roaming controller element.

The first selection response receiving module is configured to receive a first roaming controller selection response frame fed back by the AP, where the first roaming controller selection response frame carries first roaming controller response information, and the first roaming controller response information is acceptance or rejection of a request.

In an embodiment, the apparatus also includes a third information determination module.

The third information determination module is configured to determine the roaming controller element based on the first roaming controller selection response frame.

In an embodiment, the apparatus also includes a second selection request receiving module and a second selection response feedback module.

The second selection request receiving module is configured to, during a communication process between an AP and the STA, receive a second roaming controller selection request frame sent by the AP, where the second roaming controller selection request frame carries the roaming controller element.

The second selection response feedback module is configured to generate and feed back a second roaming controller selection response frame to the AP, where the second roaming controller selection response frame carries second roaming controller response information, and the second roaming controller response information is acceptance or rejection of a request.

In an embodiment, the apparatus also includes a fourth information determination module.

The fourth information determination module is configured to determine the roaming controller element based on the second roaming controller selection response frame.

In an embodiment, the second roaming function and algorithm includes at least one of link quality information collection, roaming target selection, or roaming transition function.

The roaming control apparatus provided in this embodiment and the roaming control method provided in the preceding embodiments belong to the same concept. For technical details not described in detail in this embodiment, reference may be made to any one of the preceding embodiments. The embodiment has the same beneficial effects as performing the roaming control method.

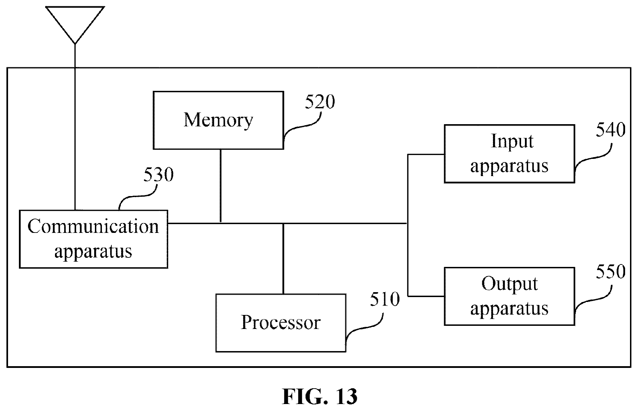

The embodiments of this application also provide a communication node. FIG. 13 is a diagram illustrating the structure of a communication node according to an embodiment. As shown in FIG. 13, the communication node provided by this application includes a memory 520, a processor 510, and a computer program stored on the memory and executable on the processor. The processor 510, when executing the program, implements the preceding roaming control method.

The communication node may also include a memory 520. One or more processors 510 may be provided in the communication node, and one processor 510 is used as an example in FIG. 13. The memory 520 is configured to store one or more programs that, when executed by the one or more processors 510, cause the one or more processors 510 to implement the roaming control method in embodiments of this application.

The communication node also includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners. Connection via the bus is used as an example in FIG. 13.

The input apparatus 540 may be configured to receive input digital or character information and generate key signal input related to user settings and function control of the communication node. The output apparatus 550 may include a display device, for example, a display screen.

The communication apparatus 530 may include a receiver and a transmitter. The communication apparatus 530 is configured to perform information transmission and reception communication under the control of the processor 510.

The memory 520, as a computer-readable storage medium, may be configured to store software programs, computer-executable programs, and modules, such as program instructions/modules (for example, the first state determination module 310, the first roaming activation module 320, and the first roaming deactivation module 330 in the roaming control apparatus) corresponding to the roaming control method described in the embodiments of this application. The memory 520 may include a program storage region and a data storage region. The program storage region may store an operating system and an application program required by at least one function. The data storage region may store data or the like created according to the use of the communication node. Additionally, the memory 520 may include a high-speed random-access memory and may also include a nonvolatile memory such as at least one disk memory, flash memory, or another nonvolatile solid-state memory. In some examples, the memory 520 may include memories that are remotely disposed with respect to the processor 510, and these remote memories may be connected to the communication node via a network. Examples of the preceding network include but are not limited to, the Internet, an intranet, a local area network, a mobile communication network, and a combination thereof.

The embodiments of this application also provide a storage medium. The storage medium stores a computer program that, when executed by a processor, implements the roaming control method according to any embodiment of this application.

Optionally, the roaming control method is applied to an AP and includes the following: A roaming controller is determined based on a roaming controller negotiation, and a state of a first roaming function and algorithm of the AP is determined based on the roaming controller, where the roaming controller negotiation includes a negotiation of a roaming controller element. In response to the state of the first roaming function and algorithm being an enabled state, the first roaming function and algorithm of the AP is activated. In response to the state of the first roaming function and algorithm being a disabled state, the first roaming function and algorithm of the AP is deactivated.

Optionally, the roaming control method is applied to an STA and includes the following: A roaming controller is determined based on a roaming controller negotiation, and a state of a second roaming function and algorithm of the STA is determined based on the roaming controller, where the roaming controller negotiation includes a negotiation of a roaming controller element. In response to the state of the second roaming function and algorithm being an enabled state, the second roaming function and algorithm of the STA is activated. In response to the state of the second roaming function and algorithm being a disabled state, the second roaming function and algorithm of the STA is deactivated.

A computer storage medium in this embodiment of this application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. Examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of this application may be written in one or more programming languages or a combination of multiple programming languages. The programming languages include object-oriented programming languages such as Java, Smalltalk, and C++ and may also include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet by an Internet service provider).

The preceding descriptions are only example embodiments of this application and are not intended to limit the scope of this application.

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of this application may be implemented in hardware or special-purpose circuits, software, logic, or any combination thereof. For example, some aspects may be implemented in hardware while other aspects may be implemented in firmware or software executable by a controller, a microprocessor, or another computing apparatus, though this application is not limited thereto.

Embodiments of this application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of this application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), and an optical memory apparatus and system (a digital video disc (DVD) or a compact disk (CD)). Computer-readable medium may include a non-transitory storage medium. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of this application has been provided above through exemplary and non-restrictive examples. However, considering the drawings and the claims, various modifications and adjustments to the preceding embodiments are apparent to those skilled in the art without deviating from the scope of this application. Accordingly, the proper scope of this application is determined according to the claims.

## Claims

1. A roaming control method, the method being applied to an access point, AP, and comprising:
determining a roaming controller based on a roaming controller negotiation, and determining a state of a first roaming function and algorithm of the AP based on the roaming controller, wherein the roaming controller negotiation comprises a negotiation of a roaming controller element;
in response to the state of the first roaming function and algorithm being an enabled state, activating the first roaming function and algorithm of the AP; and
in response to the state of the first roaming function and algorithm being a disabled state, deactivating the first roaming function and algorithm of the AP.

2. The roaming control method according to claim 1, wherein before the roaming controller is determined based on the roaming controller negotiation, the method further comprises:
during a discovery process between the AP and a station, STA, generating a beacon frame and sending the beacon frame to the STA, wherein the beacon frame carries the roaming controller element.

3. The roaming control method according to claim 1, wherein before the roaming controller is determined based on the roaming controller negotiation, the method further comprises:
during a discovery process between the AP and an STA, receiving a probe request frame sent by the STA; and
generating a probe response frame and sending the probe response frame to the STA, wherein the probe response frame carries the roaming controller element.

4. The roaming control method according to claim 1, wherein before the roaming controller is determined based on the roaming controller negotiation, the method further comprises:
during an association process between the AP and an STA, receiving an association request frame sent by the STA, wherein the association request frame comprises the roaming controller element;
in response to accepting a request of the roaming controller element of the STA, generating a first association response frame and feeding back the first association response frame to the STA, wherein the first association response frame comprises association information, and the association information does not comprise the roaming controller element; and
in response to rejecting a request of the roaming controller element of the STA, generating a second association response frame and feeding back the second association response frame to the STA, wherein the second association response frame comprises the roaming controller element.

5. The roaming control method according to claim 1, wherein before the roaming controller is determined based on the roaming controller negotiation, the method further comprises:
during a communication process between the AP and an STA, receiving a first roaming controller selection request frame sent by the STA, wherein the first roaming controller selection request frame carries the roaming controller element; and
generating a first roaming controller selection response frame and feeding back the first roaming controller selection response frame to the STA, wherein the first roaming controller selection response frame carries first roaming controller response information, and the first roaming controller response information is acceptance or rejection of a request.

6. The roaming control method according to claim 5, further comprising:
determining the roaming controller element based on the first roaming controller selection response frame.

7. The roaming control method according to claim 1, wherein before the roaming controller is determined based on the roaming controller negotiation, the method further comprises:
during a communication process between the AP and an STA, generating a second roaming controller selection request frame and sending the second roaming controller selection request frame to the STA, wherein the second roaming controller selection request frame carries the roaming controller element; and
receiving a second roaming controller selection response frame fed back by the STA, wherein the second roaming controller selection response frame carries second roaming controller response information, and the second roaming controller response information is acceptance or rejection of a request.

8. The roaming control method according to claim 7, further comprising:
determining the roaming controller element based on the second roaming controller selection response frame.

9. The roaming control method according to any one of claims 1 to 8, wherein
the first roaming function and algorithm comprises at least one of: link quality information collection, roaming target selection, or roaming transition function.

10. A roaming control method, the method being applied to a station, STA, and comprising:
determining a roaming controller based on a roaming controller negotiation, and determining a state of a second roaming function and algorithm of the STA based on the roaming controller, wherein the roaming controller negotiation comprises a negotiation of a roaming controller element;
in response to the state of the second roaming function and algorithm being an enabled state, activating the second roaming function and algorithm of the STA; and
in response to the state of the second roaming function and algorithm being a disabled state, deactivating the second roaming function and algorithm of the STA.

11. The roaming control method according to claim 10, wherein before the roaming controller is determined based on the roaming controller negotiation, the method further comprises:
during a discovery process between an access point, AP, and the STA, receiving a beacon frame sent by the AP, wherein the beacon frame carries the roaming controller element.

12. The roaming control method according to claim 10, wherein before the roaming controller is determined based on the roaming controller negotiation, the method further comprises:
during a discovery process between an AP and the STA, generating a probe request frame and sending the probe request frame to the AP; and
receiving a probe response frame fed back by the AP, wherein the probe response frame carries the roaming controller element.

13. The roaming control method according to claim 10, wherein before the roaming controller is determined based on the roaming controller negotiation, the method further comprises:
during an association process between an AP and the STA, generating an association request frame and sending the association request frame to the AP, wherein the association request frame comprises the roaming controller element; and
receiving a first association response frame fed back by the AP or a second association response frame fed back by the AP;
wherein the first association response frame comprises association information, and the association information does not comprise the roaming controller element; and the second association response frame comprises the roaming controller element.

14. The roaming control method according to claim 10, wherein before the roaming controller is determined based on the roaming controller negotiation, the method further comprises:
during a communication process between an AP and the STA, generating a first roaming controller selection request frame and sending the first roaming controller selection request frame to the AP, wherein the first roaming controller selection request frame carries the roaming controller element; and
receiving a first roaming controller selection response frame fed back by the AP, wherein the first roaming controller selection response frame carries first roaming controller response information, and the first roaming controller response information is acceptance or rejection of a request.

15. The roaming control method according to claim 14, further comprising:
determining the roaming controller element based on the first roaming controller selection response frame.

16. The roaming control method according to claim 10, wherein before the roaming controller is determined based on the roaming controller negotiation, the method further comprises:
during a communication process between an AP and the STA, receiving a second roaming controller selection request frame sent by the AP, wherein the second roaming controller selection request frame carries the roaming controller element; and
generating a second roaming controller selection response frame and feeding back the second roaming controller selection response frame to the AP, wherein the second roaming controller selection response frame carries second roaming controller response information, and the second roaming controller response information is acceptance or rejection of a request.

17. The roaming control method according to claim 16, further comprising:
determining the roaming controller element based on the second roaming controller selection response frame.

18. The roaming control method according to any one of claims 10 to 17, wherein
the second roaming function and algorithm comprises at least one of: link quality information collection, roaming target selection, and roaming transition function.

19. A communication node, comprising: a memory, a processor, a program stored on the memory and executable on the processor, and a data bus for enabling connection and communication between the processor and the memory, wherein the program, when executed by the processor, implements steps of the roaming control method according to any one of claims 1 to 18.

20. A storage medium for computer-readable storage, wherein the storage medium stores at least one program executable by at least one processor to implement steps of the roaming control method according to any one of claims 1 to 18.
